# EUROPEAN PATENT APPLICATION

(11) **EP 4 084 244 A1**
(43) Date of publication of application: **02.11.2022**
(21) Application number: 21171016.5
(22) Date of filing: 28.04.2021
(51) Int. Cl.: H02B 1/56, H02G 5/10, H02B 13/035

(54) **COOLING APPARATUS FOR A MEDIUM VOLTAGE SWITCHGEAR**

(71) Applicant: ABB Schweiz AG, 5400 Baden (CH)
(72) Inventor: SOLOGUBENKO, Oleksandr, 8906 Bonstetten (CH); STADNICKI, Adrian, 40883 Ratingen (DE); KHEIRI, Pedram, 5212 Hausen (CH); KESSLER, Michael, 42579 Heiligenhaus (DE)
(74) Representative: Maiwald Patent- und Rechtsanwaltsgesellschaft mbH

(57) **Abstract**

The present invention relates to a cooling apparatus for a medium voltage switchgear, the cooling apparatus comprising an evaporator section (6), a conduit (4), a condenser section (7), a liquid fluid and a non-condensable gas "NCG",

wherein the evaporator section (6) is configured to contact at least part of a current carrying contact (1), the conduit (4) fluidly connects the evaporator section (6) to the condenser section (7), the liquid fluid and NCG are contained within a volume formed by the evaporator section (6), the conduit (4), and the condenser section (7), the evaporator section (6) is configured such that the liquid fluid can thermally contact an outer surface of the current carrying contact (1), an insulator section (9) of the conduit (4) is electrically insulating and wherein the apparatus is configured such that in use an upper surface of the liquid fluid is located at a part of the conduit (4) vertically above the insulator section (9) of the conduit (4), the liquid fluid in the evaporator section (6) is heated to a vapour, the vapour is transferred by the conduit (4) to the condenser section (7), the vapour in the condenser section (7) is condensed to the liquid fluid and the condensed liquid fluid is passively returned via the conduit (4) towards the evaporator section (6).

## Description

### FIELD OF THE INVENTION

The present invention relates a cooling apparatus for a medium voltage switchgear, a cooling system for a medium voltage switchgear, and method of cooling at least one part of a medium voltage or high voltage switchgear with a cooling apparatus or system.

### BACKGROUND OF THE INVENTION

As compartments of gas insulated switchgears are fully sealed, heat dissipation due to losses is one major tasks of thermal management of the panel. For high current ratings in medium voltage switchgears mainly passive cooling elements are used such as heat sinks or gas cooler. A more compact solution with high efficiency consists of thermosyphons. They can deduct heat from a dedicated hot spot to areas with lower temperature outside of the compartment.

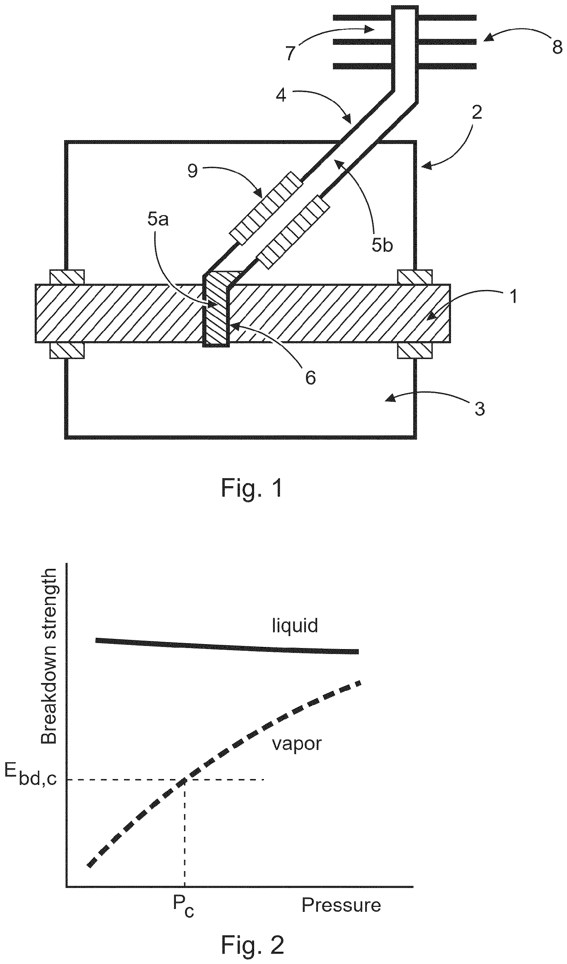

Fig. 1 shows a thermosyphon already developed by the applicant. The heat source **1** (e.g. a current-conducting busbar) is in an enclosure **2** filled with an electrically insulating gas **3.** The thermosyphon, in terms of a conduit 4 and an evaporator 6, is partially filled with specially selected dielectric fluid **5.** The heat source **1** is in thermal contact with the evaporator **6** (lower part of the thermosyphon) containing dielectric fluid in the liquid phase **5a.** The supplied heat leads to a liquid-vapour phase transition, with the vapour **5b** rising through a tube to a condenser **7** positioned above the evaporator outside of the enclosure **2.** The condenser (normally metallic for better thermal conduction and equipped with fins **8** in order to enhance the effective heat exchange with ambient air) has an internal chamber where vapour condensation takes place. The condensed liquid returns to the evaporator by the gravity force. If the condenser is placed outside of the compartment and is at the ground electric potential, an electrically insulating section **9,** made of a ceramic or an epoxy resin, must be integrated into the metallic tubing of the thermosyphon.

Conventional medium- and high-voltage gas-insulated enclosures use SF6 within the enclosure for insulation. As SF6 has very high global warming potential (GWP=23900), there is a trend to replace SF6 with eco-friendly gas mixtures, preferably having low GWP ∼ 1.

Equally, focus has moved to the fluid used within thermosyphons that also exhibit high GWP values, and new fluids that are "eco friendly" and have a low GWP are sought.

However, there are problems obtaining suitable fluids that have a low GWP and operating thermosyphons such that the fluids do not suffer from electrical breakdown.

There is a need to address these issues.

### SUMMARY OF THE INVENTION

Therefore, it would be advantageous to have an improved technique to cool internal parts of a medium voltage or high voltage switchgear that become hot due to current flow and do so in a manner that is ecologically friendly.

The object of the present invention is solved with the subject matter of the independent claims, wherein further embodiments are incorporated in the dependent claims.

In a first aspect, there is provided a cooling apparatus for a medium voltage switchgear, the cooling apparatus comprising:
- an evaporator section;
- a conduit;
- a condenser section;
- a liquid fluid; and
- a non-condensable gas "NCG".

The evaporator section is configured to contact at least part of a current carrying contact. The conduit fluidly connects the evaporator section to the condenser section. The liquid fluid and NCG are contained within a volume formed by the evaporator section, the conduit, and the condenser section. The evaporator section is configured such that the liquid fluid can thermally contact an outer surface of the current carrying contact. An insulator section of the conduit is electrically insulating. The apparatus is configured such that in use:
- an upper surface of the liquid fluid is located at a part of the conduit vertically above the insulator section of the conduit;
- the liquid fluid in the evaporator section is heated to a vapour;
- the vapour is transferred by the conduit to the condenser section; the vapour in the condenser section is condensed to the liquid fluid; and
- the condensed liquid fluid is passively returned via the conduit towards the evaporator section.

In this way, the cooling apparatus can cool the current carrying contact of a medium voltage switchgear and use a cooling liquid fluid that is "eco friendly" and has a low global warming potential number many times less than conventional fluids such as SF6, that evaporates and then re-condenses that can not in itself satisfy electrical breakdown requirements due to the vapour and liquid mix having a reduced breakdown potential value, but by providing a suitable gas that is does not condense but that sits above the liquid and vapour mix to raise the pressure of the vapour pressure of bubbles in the liquid to a level high enough to prevent electrical breakdown.

Thus, a heat pipe or thermosyphon is provided where the condensing section can be outside the switchgear enclosure where the condenser section is not at high potential because it is separated from the evaporator section by a conduit with an insulating section, and where environmental requirements are met in that the evaporating/condensing liquid used is ecologically benign with this functionality enabled through use of a suitable non-condensing gas to inhibit electrical breakdown.

In an example, the evaporator section is configured such that the liquid fluid can contact the outer surface of the current carrying contact.

In an example, at least part of the evaporator section is electrically insulating and wherein that at least part of the evaporator section that is electrically insulating is connected to the insulator section of the fluid conduit.

Thus, the whole bottom end of the thermosyphon is electrically insulating. This can be just a small part of the end of the thermosyphon, and the part of the conduit that is electrically insulating can be only the end part of the conduit next to the evaporator section.

In an example, the apparatus comprises the current carrying contact, wherein the evaporator section is fixedly attached to the outer surface of the current carrying contact.

In this manner, the evaporator section can be integrated with the current carrying contact to form for example a busbar bushing.

In an example, a fluid channel within the evaporator section surrounds the current carrying contact, wherein the fluid channel is configured such that the liquid fluid can contact the outer surface of the current carrying contact that extends around the current carrying contact, and wherein the fluid channel fluidly connects to the conduit.

In this way, cooling of the current carrying contact is further improved, because the working fluid can be heated and turned into the vapour state at a surface encircling the current carrying contact.

In an example, the condenser section comprises a gas reservoir configured to accommodate non-condensable gas.

In an example, the condenser section comprises at least one heat exchange structure.

In an example, the at least one heat exchange structure is located between the gas reservoir and the conduit.

In this way it can be ensured that the NCG does not block the inner surface of the condenser section and ensures that the vaporized fluid can be efficiently condensed back to the liquid fluid.

In an example, the liquid fluid is configured to exhibit a breakdown strength of at least 5 kV/mm.

In an example, the liquid fluid is perfluroketone C6F12O.

In an example, the non-condensable gas is configured to remain in the gaseous state over a temperature and pressure operating range of the apparatus.

In an example, the non-condensable gas is nitrogen.

In a second aspect, there is provided a cooling system for a medium voltage switchgear, the cooling system comprising:
- an evaporator section;
- a conduit;
- a condenser section;
- a liquid fluid; and
- a non-condensable gas "NCG";

The evaporator section is in contact with at least part of a current carrying contact. The conduit fluidly connects the evaporator section to the condenser section. The liquid fluid and NCG are contained within a volume formed by the evaporator section, the conduit, and the condenser section. The evaporator section is configured such that the liquid fluid thermally contacts an outer surface of the current carrying contact. An insulator section of the conduit is electrically insulating. The system is configured such that in use:
- an upper surface of the liquid fluid is located at a part of the conduit vertically above the insulator section of the conduit;
- the liquid fluid in the evaporator section is heated to a vapour;
- the vapour is transferred by the conduit to the condenser section;
- the vapour in the condenser section is condensed to the liquid fluid; and
- the condensed liquid fluid is passively returned via the conduit towards the evaporator section.

In a third aspect, there is provided a method of cooling at least one part of a medium voltage switchgear with a cooling apparatus or system, the cooling apparatus or system comprising:
- an evaporator section;
- a conduit;
- a condenser section;
- a liquid fluid; and
- a non-condensable gas "NCG";
wherein, the evaporator section contacts at least part of a current carrying contact;
wherein, the conduit fluidly connects the evaporator section to the condenser section;
wherein, the liquid fluid and NCG are contained within a volume formed by the evaporator section, the conduit, and the condenser section;
wherein the evaporator section is configured such that the liquid fluid thermally contacts an outer surface of the current carrying contact;
wherein, an insulator section of the conduit is electrically insulating; and
wherein, the method comprises:
locating an upper surface of the liquid fluid at a part of the conduit vertically above the insulator section of the conduit;
heating the liquid fluid in the evaporator section to a vapour;
transferring the vapour by the conduit to the condenser section;
condensing the vapour in the condenser section to the liquid fluid, and
passively returning the condensed liquid fluid via the conduit towards the evaporator section.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic illustration of an existing thermosyphon for cooling of heat sources at an electrical potential;
Fig. 2 shows typical pressure dependence of the breakdown strength of a fluid in the liquid and the vapour states;
Fig. 3 shows typical saturated pressure of a pure fluid as a function of temperature;
Fig. 4 shows the breakdown strength of C6K vapour (solid line) and, for comparison, air at room temperature (dashed line), as a function of pressure; and
Fig. 5 shows a schematic illustration of a new thermosyphon for cooling of heat sources at an electrical potential.

### DETAILED DESCRIPTION OF EMBODIMENTS

Figs. 2-5 relate to a cooling apparatus and cooling system for a medium voltage switchgear, a methods of cooling at least one part of a medium voltage switchgear with a cooling apparatus or system. A thermosyphon is described that can form a cooling apparatus that can in effect be retro-fitted to a switchgear, or the thermosyphon can be already installed and in which case it forms in effect a cooling system. The cooling apparatus/system is described with respect to the cooling of a current carrying contact of a switchgear, but can be used to cool all manner of parts that form "hot spots" in electrical equipment.

In an example of the cooling apparatus for a medium voltage switchgear, the cooling apparatus comprises an evaporator section 6, a conduit 4, a condenser section 7, a liquid fluid, and a non-condensable gas "NCG". The evaporator section is configured to contact at least part of a current carrying contact 1. The conduit fluidly connects the evaporator section to the condenser section. The liquid fluid and NCG are contained within a volume formed by the evaporator section, the conduit, and the condenser section. The evaporator section is configured such that the liquid fluid can thermally contact an outer surface of the current carrying contact. An insulator section 9 of the conduit is electrically insulating. The apparatus is configured such that in use:
- an upper surface of the liquid fluid is located at a part of the conduit vertically above the insulator section of the conduit;
- the liquid fluid in the evaporator section is heated to a vapour;
- the vapour is transferred by the conduit to the condenser section;
- the vapour in the condenser section is condensed to the liquid fluid; and
- the condensed liquid fluid is passively returned via the conduit towards the evaporator section.

In an example, the evaporator section is configured to surround at least part of a current carrying contact.

In an example, the evaporator section is configured to enable the liquid fluid to directly contact the outer surface of the current carrying contact.

In an example, the evaporator section is located inside an enclosure 2 of a medium voltage switchgear and the condenser section or at least a part of the condenser section is located outside of the enclosure.

In an example, the enclosure 2 is filled with an electrically insulating gas 3.

According to an example, the evaporator section is configured such that the liquid fluid can contact the outer surface of the current carrying contact.

In an example, the liquid fluid has a low global warming potential (GWP).

In an example, the liquid fluid has a global warming potential less than the global warming potential of SF6.

In an example, the liquid fluid has a global warming potential less than 10000.

In an example, the liquid fluid has a global warming potential less than 1000.

In an example, the liquid fluid has a global warming potential less than 100.

In an example, the liquid fluid has a global warming potential less than 10.

In an example, the liquid fluid has a global warming potential approximately equal 1.

In an example, the non-condensable gas is nitrogen.

In an example, the current carrying contact is configured to connect to a primary contact, that for example is configured to connect to a terminal of a circuit breaker of the switchgear.

In an example, the evaporator section is ring shaped.

In an example, the evaporator section comprises an insulating material such as ceramic and glass materials.

In an example, the evaporator section comprises plastic and/or rubber materials.

In an example, the evaporator section comprises epoxy resin.

In an example, the evaporator section comprises glass-fiber-reinforced epoxy resin.

In an example, the evaporator section comprises copper.

In an example, the insulator section comprises an insulating material such as ceramic and glass materials.

In an example, the insulator section comprises plastic and/or rubber materials.

In an example, the insulator section comprises epoxy resin.

In an example, the insulator section comprises glass-fiber-reinforced epoxy resin.

Thus, most of the conduit can have a metallic wall, but at the insulator section the wall of the conduit is not metallic but is insulating.

According to an example, at least part of the evaporator section is electrically insulating and wherein the at least part of the evaporator section that is electrically insulating is connected to the insulator section of the fluid conduit.

In an example, the apparatus comprises the current carrying contact, wherein the evaporator section is fixedly attached to the outer surface of the current carrying contact.

Thus, the evaporator section can be integrated with the current carrying contact to form for example a busbar bushing.

In an example, the evaporator section surrounds and is fixedly attached to the outer surface of the current carrying contact.

According to an example, the condenser section is located at a higher elevation than the evaporator section.

According to an example, a fluid channel within the evaporator section surrounds the current carrying contact. The fluid channel is configured such that the liquid fluid can contact the outer surface of the current carrying contact that extends around the current carrying contact, and the fluid channel fluidly connects to the conduit.

According to an example, the condenser section comprises a gas reservoir 10 configured to accommodate non-condensable gas.

In an example, the reservoir comprises an adsorber for removing water from the vapourized fluid.

According to an example, the condenser section comprises at least one heat exchange structure 8.

In an example, the at least one heat exchange structure comprises at least one cooling fin, rib or vertical channel.

According to an example, the at least one heat exchange structure is located between the gas reservoir and the conduit.

According to an example, the liquid fluid is configured to exhibit a breakdown strength of at least 5 kV/mm.

According to an example, the liquid fluid is perfluroketone C6F12O.

According to an example, the non-condensable gas is configured to remain in the gaseous state over a temperature and pressure operating range of the apparatus.

In an example, the non-condensable gas has a partial pressure of at least 0.20 bar at minus 15C.

According to an example, the non-condensable gas is nitrogen.

In an example of the cooling system for a medium voltage switchgear, the cooling system comprises an evaporator section 6, a conduit 4, a condenser section 7, a liquid fluid, and a non-condensable gas "NCG". The evaporator section is in contact with at least part of a current carrying contact 1. The conduit fluidly connects the evaporator section to the condenser section. The liquid fluid and NCG are contained within a volume formed by the evaporator section, the conduit, and the condenser section. The evaporator section is configured such that the liquid fluid thermally contacts an outer surface of the current carrying contact. An insulator section 9 of the conduit is electrically insulating. The system is configured such that in use:
- an upper surface of the liquid fluid is located at a part of the conduit vertically above the insulator section of the conduit;
- the liquid fluid in the evaporator section is heated to a vapour;
- the vapour is transferred by the conduit to the condenser section;
- the vapour in the condenser section is condensed to the liquid fluid; and
- the condensed liquid fluid is passively returned via the conduit towards the evaporator section.

In an example, the evaporator section is configured to surround at least part of a current carrying contact.

In an example, the evaporator section is configured to enable the liquid fluid to directly contact the outer surface of the current carrying contact.

In an example, the evaporator section is located inside an enclosure 2 of a medium voltage switchgear and the condenser section or at least a part of the condenser section is located outside of the enclosure.

In an example, the enclosure 2 is filled with an electrically insulating gas 3.

In an example, the evaporator section is configured such that the liquid fluid contacts the outer surface of the current carrying contact.

In an example, the liquid fluid has a low global warming potential.

In an example, the liquid fluid has a global warming potential less than the global warming potential of SF6.

In an example, the liquid fluid has a global warming potential less than 10000.

In an example, the liquid fluid has a global warming potential less than 1000.

In an example, the liquid fluid has a global warming potential less than 100.

In an example, the liquid fluid has a global warming potential less than 10.

In an example, the liquid fluid has a global warming potential approximately equal 1.

In an example, the non-condensable gas is nitrogen.

In an example, the current carrying contact is configured to connect to a primary contact, that for example is configured to connect to a terminal of a circuit breaker of the switchgear.

In an example, the evaporator section is ring shaped.

In an example, the evaporator section comprises an insulating material such as ceramic and glass materials.

In an example, the evaporator section comprises plastic and/or rubber materials.

In an example, the evaporator section comprises epoxy resin.

In an example, the evaporator section comprises glass-fiber-reinforced epoxy resin.

In an example, the evaporator section comprises copper.

In an example, the insulator section comprises an insulating material such as ceramic and glass materials.

In an example, the insulator section comprises plastic and/or rubber materials.

In an example, the insulator section comprises epoxy resin.

In an example, the insulator section comprises glass-fiber-reinforced epoxy resin.

In an example, at least part of the evaporator section is electrically insulating and the at least part of the evaporator section that is electrically insulating is connected to the insulator section of the fluid conduit.

In an example, the evaporator section surrounds and is fixedly attached to the outer surface of the current carrying contact.

In an example, a fluid channel within the evaporator section surrounds the current carrying contact. The fluid channel is configured such that the liquid fluid contacts the outer surface of the current carrying contact that extends around the current carrying contact, and the fluid channel fluidly connects to the conduit.

In an example, the condenser section comprises a gas reservoir 10 configured to accommodate non-condensable gas.

In an example, the reservoir comprises an adsorber for removing water from the vapourized fluid.

In an example, the condenser section comprises at least one heat exchange structure 8.

In an example, the at least one heat exchange structure comprises at least one cooling fin, rib or vertical channel.

In an example, the at least one heat exchange structure is located between the gas reservoir and the conduit.

In an example, the liquid fluid is configured to exhibit a breakdown strength of at least 5 kV/mm.

In an example, the liquid fluid is perfluroketone C6F12O.

In an example, the non-condensable gas is configured to remain in the gaseous state over a temperature and pressure operating range of the apparatus.

In an example, the non-condensable gas has a partial pressure of at least 0.20 bar at minus 15C.

In an example, the non-condensable gas is nitrogen.

In an example of the method of cooling at least one part of a medium voltage switchgear with a cooling apparatus or system, the cooling apparatus or system comprises an evaporator section 6, a conduit 4, a condenser section 7, a liquid fluid, and a non-condensable gas "NCG". The evaporator section is contacts at least part of a current carrying contact. The conduit fluidly connects the evaporator section to the condenser section. The liquid fluid and NCG are contained within a volume formed by the evaporator section, the conduit, and the condenser section. The evaporator section is configured such that the liquid fluid thermally contacts an outer surface of the current carrying contact. An insulator section 9 of the conduit is electrically insulating. The method comprises:
- locating an upper surface of the liquid fluid at a part of the conduit vertically above the insulator section of the conduit;
- heating the liquid fluid in the evaporator section to a vapour;
- transferring the vapour by the conduit to the condenser section;
- condensing the vapour in the condenser section to the liquid fluid; and
- passively returning the condensed liquid fluid via the conduit towards the evaporator section.

In an example, the evaporator section is configured to surround at least part of a current carrying contact.

In an example, the evaporator section is located inside an enclosure 2 of a medium voltage switchgear and the condenser section or at least a part of the condenser section is located outside of the enclosure

In an example, the evaporator section is configured such that the liquid fluid can directly contact the outer surface of the current carrying contact.

In an example, the liquid fluid has a low global warming potential.

In an example, the liquid fluid has a global warming potential less than the global warming potential of SF6.

In an example, the liquid fluid has a global warming potential less than 10000.

In an example, the liquid fluid has a global warming potential less than 1000.

In an example, the liquid fluid has a global warming potential less than 100.

In an example, the liquid fluid has a global warming potential less than 10.

In an example, the liquid fluid has a global warming potential approximately equal 1.

In an example, the non-condensable gas is nitrogen.

In an example, the current carrying contact is configured to connect to a primary contact, that for example is configured to connect to a terminal of a circuit breaker of the switchgear.

In an example, the evaporator section is ring shaped.

In an example, the evaporator section comprises an insulating material such as ceramic and glass materials.

In an example, the evaporator section comprises plastic and/or rubber materials.

In an example, the evaporator section comprises epoxy resin.

In an example, the evaporator section comprises glass-fiber-reinforced epoxy resin.

In an example, the evaporator section comprises copper.

In an example, the insulator section comprises an insulating material such as ceramic and glass materials.

In an example, the insulator section comprises plastic and/or rubber materials.

In an example, the insulator section comprises epoxy resin.

In an example, the insulator section comprises glass-fiber-reinforced epoxy resin.

In an example, at least part of the evaporator section is electrically insulating and the at least part of the evaporator section that is electrically insulating is connected to the insulator section of the fluid conduit.

In an example, the evaporator section surrounds and is fixedly attached to the outer surface of the current carrying contact.

In an example, a fluid channel within the evaporator section surrounds the current carrying contact. The fluid channel is configured such that the liquid fluid contacts the outer surface of the current carrying contact that extends around the current carrying contact, and the fluid channel fluidly connects to the conduit.

In an example, the condenser section comprises a gas reservoir 10 configured to accommodate non-condensable gas.

In an example, the condenser section comprises at least one heat exchange structure 8.

In an example, the at least one heat exchange structure comprises at least one cooling fin, rib or vertical channel.

In an example, the at least one heat exchange structure is located between the gas reservoir and the conduit.

In an example, the liquid fluid is configured to exhibit a breakdown strength of at least 5 kV/mm.

In an example, the liquid fluid is perfluroketone C6F12O.

In an example, the non-condensable gas is configured to remain in the gaseous state over a temperature and pressure operating range of the apparatus.

In an example, the non-condensable gas has a partial pressure of at least 0.20 bar at minus 15C.

In an example, the non-condensable gas is nitrogen.

The cooling apparatus for a medium voltage switchgear, the cooling system for a medium voltage switchgear, and the method of cooling at least one part of a medium voltage or high voltage switchgear with a cooling apparatus or system are further described in specific detail, where reference is again made to Figs. 2-5.

The inventors realised that in order to maintain the eco-friendly nature of the whole switchgear unit, not only must the insulating gas within the enclosure of the switchgear have a much lower global warming potential (GWP) that typically uses SF6 that has a GWP of 23900 and the GWP should ideally be 1, but the cooling fluid of the thermosyphon must also have a low GWP ∼ 1. However, conventional refrigerants have GWP >> 1. The refrigerant must also satisfy certain requirements of non-flammability and dielectric strength. It is customary for the switchgear to be operational at ambient temperatures as low as -25°C. The dielectric breakdown strength of the fluid *E_{bd}* should be higher than the critical value *E_{bd,c},* which depends on the electric field strength and geometry. As illustrated in Figs. 2-3, the dielectric breakdown strength of the vapour phase decrease with vapour pressure which, in turn, decreases with temperature. Since, during operation, the boiling liquid in the evaporator contains some vapour (bubbles), a breakdown may be initiated in the vapour phase at low enough temperature *T_{c}* at vapour pressure *P_{c}.* The most critical conditions are at the start of operation, when the whole system is still cold, but bubbles of low-pressure vapour begin to appear in the liquid. The possibility of a breakdown in low-pressure vapour severely limits the choice of refrigerants for medium-voltage applications with conventionally designed thermosyphons.

From this understanding the inventors developed the new cooling technology described here. The inventors realised that a solution could be found by using a non-condensable gas, and therefore selecting a working liquid fluid, that is evaporated and then condensed to provide cooling, with specific amount of non-condensable gas (NCG). Then the overall design, and functioning, of the thermosyphon needed to be adapted due to the presence of the NCG.

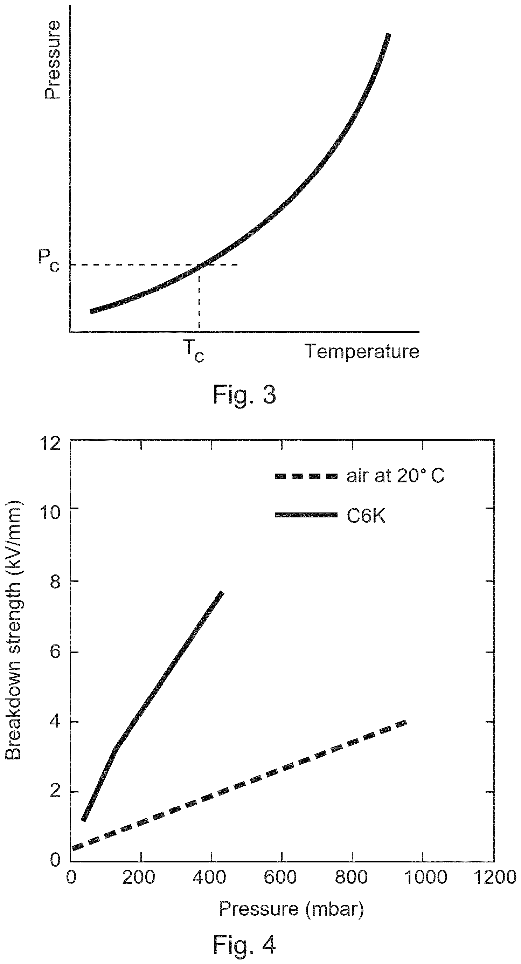

Due to compactness of gas-insulated enclosures, available space is limited for the electrically insulating section 9 of the thermosyphon. This limits the distance between the grounded metallic section and the section at electric potentials as high as 200 kV. Therefore, the dielectric fluid in the electrically insulating section 9 has to withstand electric fields up to 10 kV/mm. In the target Medium voltage (MV) application, the required breakdown strength is *E_{bd,c}* = 5.4 kV/mm and the lowest operation temperature is -15°C. For this target application, 3M^{™} Novec 649 Engineered Fluid (perfluroketone C₆F₁₂O, further denoted C6K) was found to be a suitable refrigerant fluid, since it is one of few candidate fluids which are not flammable, have GWP=1 and high dielectric strength in both the liquid and the gaseous states. Fig. 4 compares the breakdown strength of C6K vapour with air at room temperature as a function of pressure. Other refrigerants can however be utilized. However, the dielectric strength of C6K vapour phase would be less than 5.4 kV/mm at pressures below *P_{c}* = 0.25 bar, that corresponds to the C6K boiling temperatures lower than *T_{c}* = 14.1°C.

Thus, the inventors realised that a solution lay in increasing the low-temperature dielectric strength of a low-GWP working fluid by intentionally adding to the fluid a gas, which always remains in the gaseous state in the operating pressure and temperature range of the thermosyphon (non-condensable gas, or NCG). Examples of suitable NCG candidates with negligible GWP are technical air and nitrogen. The presence of NCG mixed with the operating fluid vapour above the liquid pool then raises the pressure of the gas mixture above the saturated pressure of the pure fluid shown in Fig. 3. This way, the vapour pressure in bubbles of boiling liquid can be made high enough to prevent an electrical breakdown, if enough NCG is present in the thermosyphon.

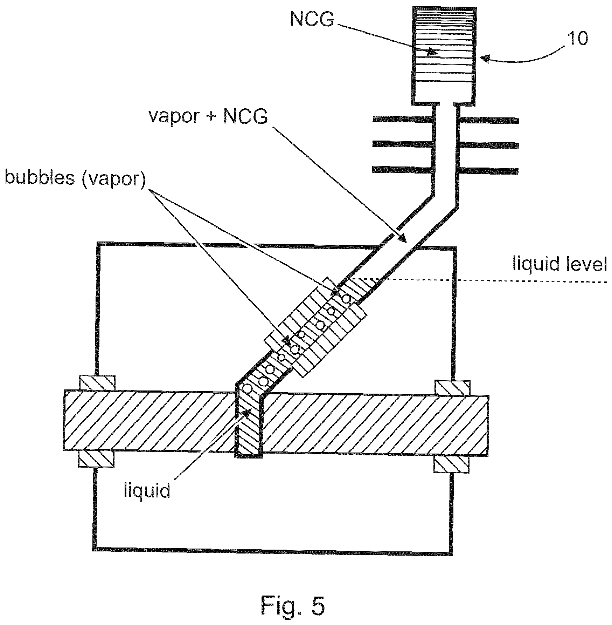

The NCG does not need to have particularly high dielectric strength. The working liquid however completely fills the insulating part 9 of the thermosyphon, as illustrated in Fig. 5. The gas bubbles of boiling liquid contain only the fluid vapor, with a negligibly small amount of NCG if some is dissolved in the boiling liquid. The NCG resides predominantly in the upper part of the thermosyphon above the liquid level, where the electric field strength is small; that is, NCG helps in increasing the bubble vapour pressure but does not act itself as electrical insulator.

Concerning the target MV application, pure C6K at -15°C has saturated pressure of 0.05 bar; therefore, the required partial pressure of added NCG was determined to be at least 0.20 bar in order to have the required vapour pressure of *P* > *P_{c}* = 0.25 bar in the bubbles during startup.

Briefly returning to a conventional design of thermosyphon, a conventional thermosyphon design, illustrated in Fig. 1, is not suitable for operation with an NCG for the following reasons. Before the startup, the refrigerant fluid vapour and NCG are homogeneously distributed above the liquid level; a small amount of NCG can also be dissolved in the liquid. During thermosyphon operation, vapour with NCG continuously rises from the evaporator to the condenser, where the working fluid condenses and returns to the evaporator by gravity. Only a small amount of NCG dissolves in the condensate and returns to the evaporator with the liquid. Therefore, most of the NCG tends to accumulate in the upper part of the thermosyphon, blocking the surface of the inner chamber of the condenser and so preventing the operation of the thermosyphon.

Therefore, the solution was to equip the thermosyphon with a gas reservoir **10** fluidly connected to the condenser inner chamber, in order to accommodate the NCG during operation. Before the startup, the refrigerant fluid vapour and NCG will be homogeneously distributed in the thermosyphon and the gas reservoir, but after a certain startup period of operation most of NCG will be mostly collected in the reservoir **10** and will not interfere with fluid vapour condensation in the condenser. The volume of gas reservoir is selected such, that it can accommodate almost all NCG during operation of the switchgear at typical conditions (such as the nominal heat load of the heat source **1** and the typical ambient temperature).

The above relates to a specific detailed embodiment, and certain variations are possible, including for example:
- Instead of C6K, other fluids with suitable dielectric performance and acceptably low GWP can be used.
- Thermosyphons may be cooled passively by ambient air by natural convection and radiation, or by forced air convection using active elements such as fans, or using a circulating cooling liquid with a chiller.
- Gas reservoir **10** may also accommodate an adsorber (e.g. a molecular sieve) for removing water from the operating fluid.
- Different geometries and materials of the evaporator **6,** condenser **7,** electrically insulating section **9,** and gas reservoir **10** are possible.
- Instead of a separate gas reservoir **10** fluidly connected to the condenser, one can oversize the inner chamber of the condenser by adding to its upper part the same volume that is needed for the gas reservoir.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A cooling apparatus for a medium voltage switchgear, the cooling apparatus comprising:
- an evaporator section (6);
- a conduit (4);
- a condenser section (7);
- a liquid fluid; and
- a non-condensable gas "NCG";
wherein, the evaporator section is configured to contact at least part of a current carrying contact (1);
wherein, the conduit fluidly connects the evaporator section to the condenser section;
wherein, the liquid fluid and NCG are contained within a volume formed by the evaporator section, the conduit, and the condenser section;
wherein the evaporator section is configured such that the liquid fluid can thermally contact an outer surface of the current carrying contact;
wherein, an insulator section (9) of the conduit is electrically insulating; and
wherein, the apparatus is configured such that in use:
an upper surface of the liquid fluid is located at a part of the conduit vertically above the insulator section of the conduit;
the liquid fluid in the evaporator section is heated to a vapour;
the vapour is transferred by the conduit to the condenser section;
the vapour in the condenser section is condensed to the liquid fluid; and
the condensed liquid fluid is passively returned via the conduit towards the evaporator section.

2. Apparatus according to claim 1, wherein the evaporator section is configured such that the liquid fluid can contact the outer surface of the current carrying contact.

3. Apparatus according to any of claims 1-2, wherein at least part of the evaporator section is electrically insulating and wherein the at least part of the evaporator section that is electrically insulating is connected to the insulator section of the fluid conduit.

4. Apparatus according to any of claims 1-3, wherein a fluid channel within the evaporator section surrounds the current carrying contact, wherein the fluid channel is configured such that the liquid fluid can contact the outer surface of the current carrying contact that extends around the current carrying contact, and wherein the fluid channel fluidly connects to the conduit.

5. Apparatus according to any of claims 1-4, wherein the condenser section comprises a gas reservoir (10) configured to accommodate non-condensable gas.

6. Apparatus according to any of claims 1-5, wherein the condenser section comprises at least one heat exchange structure (8).

7. Apparatus according to claim 6 when dependent upon claim 5, wherein the at least one heat exchange structure is located between the gas reservoir and the conduit.

8. Apparatus according to any of claims 1-7, wherein the liquid fluid is configured to exhibit a breakdown strength of at least 5 kV/mm.

9. Apparatus according to any of claims 1-8, wherein the liquid fluid is perfluroketone C₆F₁₂O.

10. Apparatus according to any of claims 1-9, wherein the non-condensable gas is configured to remain in the gaseous state over a temperature and pressure operating range of the apparatus.

11. Apparatus according to any of claims 1-10, wherein the non-condensable gas is nitrogen.

12. A cooling system for a medium voltage switchgear, the cooling system comprising:
- an evaporator section (6);
- a conduit (4);
- a condenser section (7);
- a liquid fluid; and
- a non-condensable gas "NCG";
wherein, the evaporator section is in contact with at least part of a current carrying contact (1);
wherein, the conduit fluidly connects the evaporator section to the condenser section;
wherein, the liquid fluid and NCG are contained within a volume formed by the evaporator section, the conduit, and the condenser section;
wherein the evaporator section is configured such that the liquid fluid thermally contacts an outer surface of the current carrying contact;
wherein, an insulator section (9) of the conduit is electrically insulating; and
wherein, the system is configured such that in use:
an upper surface of the liquid fluid is located at a part of the conduit vertically above the insulator section of the conduit;
the liquid fluid in the evaporator section is heated to a vapour;
the vapour is transferred by the conduit to the condenser section;
the vapour in the condenser section is condensed to the liquid fluid; and
the condensed liquid fluid is passively returned via the conduit towards the evaporator section.

13. A method of cooling at least one part of a medium voltage switchgear with a cooling apparatus or system, the cooling apparatus or system comprising:
- an evaporator section (6);
- a conduit (4);
- a condenser section (7);
- a liquid fluid; and
- a non-condensable gas "NCG";
wherein, the evaporator section contacts at least part of a current carrying contact;
wherein, the conduit fluidly connects the evaporator section to the condenser section;
wherein, the liquid fluid and NCG are contained within a volume formed by the evaporator section, the conduit, and the condenser section;
wherein the evaporator section is configured such that the liquid fluid thermally contacts an outer surface of the current carrying contact;
wherein, an insulator section (9) of the conduit is electrically insulating; and
wherein, the method comprises:
locating an upper surface of the liquid fluid at a part of the conduit vertically above the insulator section of the conduit;
heating the liquid fluid in the evaporator section to a vapour;
transferring the vapour by the conduit to the condenser section;
condensing the vapour in the condenser section to the liquid fluid; and
passively returning the condensed liquid fluid via the conduit towards the evaporator section.
